# EUROPÄISCHE PATENTANMELDUNG

(11) **EP 2 846 096 A1**
(43) Veröffentlichungstag der Anmeldung: **11.03.2015**
(21) Anmeldenummer: 13183555.5
(22) Anmeldetag: 09.09.2013
(51) Int. Cl.: F23R 3/00, F23R 3/46, F01D 9/02

(54) **Rohrbrennkammer mit einem Flammrohr-Endbereich und Gasturbine**

(71) Anmelder: Siemens Aktiengesellschaft, 80333 München (DE)
(72) Erfinder: Hase, Matthias, 45478 Mülheim (DE)

(57) **Zusammenfassung**

Die Erfindung betrifft eine Rohrbrennkammer (22) für eine Gasturbine (1), mit
- einem Brennkammerkopfende (24), an welchem mindestens eine erste Brenneranordnung (11,26) angeordnet ist,
- einem im Wesentlichen zylindrisch ausgebildeten Flammrohr (28), welches eine erste Verbrennungszone (30) umschließt und einen zylindrischen Flammrohr-Endbereich (32, 46, 52, 72) umfasst, und
- einem Überleitungskanal (36), wobei der zylindrische Flammrohr-Endbereich (28) in den Überleitungskanal hineinragt und der Überleitungskanal das Flammrohr fluidisch mit einem an einen Turbineneingangsbereich anordenbaren Brennkammerausgang (34) verbindet,
- wobei der zylindrische Flammrohr-Endbereich eine Anzahl an Kühlkanälen (44, 48,, 54, 66, 70) umfasst, welche im Wesentlichen parallel zur Mantelfläche des Flammrohr-Endbereichs im Inneren des Flammrohr-Endbereiches verlaufen.

Die erfindungsgemäße Rohrbrennkamer ermöglicht die Senkung von Schadstoffemissionen der Gasturbine.

Hierzu ist die Ausbildung und/oder Anordnung der Kühlkanäle derart, dass thermisch weniger beanspruchte Bereiche (50) durchschnittlich von weniger Kühlluft durchströmt sind als thermisch höher beanspruchte Bereiche (42) des Flammrohr-Endbereichs (32, 46, 52, 72).

## Beschreibung

Die Erfindung betrifft eine Rohrbrennkammer einer Gasturbine sowie eine Gehäusekomponente der Rohrbrennkammer. Die Gehäusekomponente ist als Flammrohr-Endbereich ausbildet.

Eine Gasturbine umfasst im einfachsten Fall einen Verdichter zur Bereitstellung verdichteter Luft, mindestens eine Brennkammer und eine Turbine.

Die Brennkammer umfasst zum Einleiten von Brennstoff in das Innerer der Brennkammer mindestens einen Brenner. Der in die Brennkammer eingeleitete Brennstoff wird unter Reaktion mit der vom Verdichter bereitgestellten Verbrennungsluft in mindestens einer Verbrennungszone der Brennkammer zu einem heißen Arbeitsgas umgesetzt.

Mit dem heißen Arbeitsgas wird die Turbine in Drehung versetzt, so dass eine Welle angetrieben wird. Ein Teil der an die Welle übertragenen Rotationsenergie dient dem Antrieb des Verdichters. Der restliche Teil der Rotationsenergie kann zum Antrieb einer Arbeitskraftmaschine, insbesondere eines Generators, verwendet werden.

Das innere Gehäuse der Brennkammer, welches unmittelbar das Innere der Brennkammer umgibt, ist insbesondere im Bereich der mindestens einen Verbrennungszone einem hohen Hitzeeintrag ausgesetzt.

Die Erfindung betrifft eine Rohrbrennkammer mit einem Brennkammerkopfende, an welchem eine Brennervorrichtung angeordnet ist. Die Rohrbrennkammer umfasst ein sich von dem Brennkammerkopfende bis zu einem Übergangsbereich erstreckendes, im Wesentlichen zylindrisch ausgebildetes Flammrohr mit einem zylindrischen Endbereich. Der zylindrische Endbereich kann auch mit "Cooling Ring" bezeichnet werden. Das Flammrohr umschließt im Wesentlichen die Verbrennungszone der Brennervorrichtung. Die Rohrbrennkammer kann weitere Brenneranordnungen umfassen, die in stromab gelegene Verbrennungszonen Brennstoff einleiten. Der zylindrische Flammrohr-Endbereich ragt in eine Bauteilkomponente des Rohrbrennkammergehäuses hinein, welche der Überleitung der aus dem Flammrohr strömenden Heißgase zur Turbine dient und einen stromauf gelegenen Eingangsbereich und einen stromab gelegenen Ausgangsbereich umfasst, wobei der Eingangsbereich des Überleitungsstücks im Allgemeinen einen kreisförmigen Querschnitt aufweisen kann und der Ausgangsbereich des Überleitungsstücks an den Umriss eines Ringsemgentes angepasst sein kann. Im Rahmen dieser Erfindung sei das Überleitungsstück mit "Transition" bezeichnet. Das Flammrohr kann auch mit "Basket" bezeichnet werden. Aus dem Stand der Technik ist es bekannt, den zylindrischen Endbereich des Flammrohres mit Kühlluftkanälen zu versehen, da dieser einem besonders hohen Hitzeeintrag der Brennerflammen ausgesetzt ist. Die Kühlluftkanäle verlaufen im Wesentlichen parallel zur Mantelfläche des zylindrischen Endbereichs - also im Inneren des Flammrohr-Endbereiches. Die Verlaufsrichtung der Kühlluftkanäle kann beispielsweise parallel zu einer Hauptströmungsrichtung bzw. Längsachse des Flammrohres weisen. Die Eintrittsöffnungen der Kühlluftkanäle befinden sich an der Außenseite des Flammrohres. Die Austrittsöffnungen der Kühlluftkanäle sind derart angeordnet, dass die Kühlluft in das Innere der Brennkammer eingeleitet wird. Insbesondere können die Austrittsöffnungen sich an der Innenseite des Flammrohres oder an der stromab gelegenen Stirnseite des Endbereiches befinden. Eine Erhöhung der Kühlluftmenge, die durch den zylindrischen Flammrohr-Endbereich strömt, verbessert die Kühlung dieses Bauteils. Allerdings erzeugt dies eine ungünstige Erhöhung der Schadstoffemissionen an NOx, da die Kühlluft nicht als Verbrennungsluft verwendet werden kann und eine ungünstige Erhöhung an CO, da die kalte Luft aus den Kühlluftkanälen kalte Strähnen in der Brennkammer erzeugt, so dass die CO Ausbrandreaktionen in diesen Bereichen gebremst werden. Üblicherweise wird dies mit "Quenching" der CO Ausbrandreaktion bezeichnet.

Die Erfindung geht von einer gattungsgemäßen Rohrbrennkammer aus, die an einem Brennkammerkopfende mindestens eine erste Brennervorrichtung umfasst, ein im Wesentlichen zylindrisch ausgebildetes Flammrohr aufweist (welches eine erste Verbrennungszone umschließt und einen zylindrischen Flammrohr-Endbereich umfasst), und
- einen Überleitungskanal, wobei der zylindrische Flammrohr-Endbereich in den Überleitungskanal hineinragt und der Überleitungskanal das Flammrohr fluidisch mit einem an einen Turbineneingangsbereich anordenbaren Brennkammerausgang verbindet,
- wobei der zylindrische Flammrohr-Endbereich eine Anzahl an Kühlkanälen umfasst, welche im Wesentlichen parallel zur Mantelfläche des Flammrohr-Endbereichs im Inneren des Flammrohr-Endbereiches verlaufen.

Aufgabe der vorliegenden Erfindung ist es, eine gattungsgemäße Rohrbrennkammer anzugeben, mit welcher Schadstoffemissionen gesenkt werden können.

Die Aufgabe wird erfindungsgemäß bei einer gattungsgemäßen Rohrbrennkammer dadurch gelöst, dass die Ausbildung und/oder Anordnung der Kühlkanäle im Flammrohr-Endbereich derart ist, dass thermisch weniger beanspruchte Bereiche durchschnittlich von weniger Kühlluft durchströmt sind als thermisch höher beanspruchte Bereiche des Flammrohr-Endbereichs.

Die erfindungsgemäße Ausbildung des Cooling Rings ermöglicht eine Einsparung von Kühlluft, die somit zur Reduzierung von NOx als Verbrennungsluft zur Verfügung steht. Gleichzeitig werden die kälteren Bereiche im Inneren der Brennkammer nicht noch unnötig mit Kühlluft aus dem Cooling Ring weiter abgekühlt, so dass erfindungsgemäß auch eine Reduzierung der CO Schadstoffemissionen bewirkt wird. Da die Anzahl der Kühlkanäle bzw. die Kühlluftmenge nur in den Bereichen des Cooling Rings eingespart wird, der thermisch weniger beansprucht ist, kann trotz der Reduzierung der Kühlluftmenge eine ausreichende Kühlung des Bauteils gewährleistet werden.

Vorteilhafte Ausgestaltungen der Erfindung sind in der nachfolgenden Beschreibung und den Unteransprüchen angegeben, deren Merkmale einzeln und in beliebiger Kombination miteinander angewendet werden können.

Es kann vorteilhaft vorgesehen sein, dass die Brenneranordnung am Brennkammerkopfende eine Anzahl von Brennern umfasst, welcher entlang des Umfangs der Brennkammer ringförmig angeordnet sind, so dass während des Betriebs jeweils stromab eines Brenner ein sich in Strömungsrichtung verbreiternder, thermisch höher beanspruchter Bereich des Flammrohres ausgebildet ist, welcher sich bis in den Flammrohr-Endbereich des Flammrohres erstreckt, wobei die Bereiche zwischen den thermisch höher beanspruchten Bereichen thermisch weniger beansprucht sind.

Die thermisch höher beanspruchten Bereiche des Flammrohres stromab der Brennerausgänge können im Wesentlichen dreieckförmig ausgebildet sein. Die Brenneranordnung kann aus einem zentral angeordneten Pilotbrenner und einer Anzahl an Hauptdrallerzeugern bestehen. Die Hauptdrallerzeuger können ringförmig um den Pilotbrenner angeordnet sein, wobei jeder Hauptdrallerzeuger eine von einem Gehäuse umgebene (vorzugsweise zylindrische) Vormischstrecke umfasst mit einer sich in Strömungsrichtung erstreckenden zentral angeordneten Brennerlanze. Zur Erzeugung eines Dralls des durch die Vormischstrecke strömenden Fluids sind Drallschaufeln in der Vormischstrecke angeordnet, die sich an der Brennerlanze abstützen können und sich bis zu dem die Vormischstrecke umgebenden Gehäuse erstrecken können. Die Austrittsöffnung der Vormischstrecke kann als Brennerausgang bezeichnet werden.

Vorteilhafterweise kann weiter vorgesehen sein, dass die Kühlkanäle sich im Wesentlichen parallel zu einer Längsachse der Brennkammer erstrecken.

Diese Anordnung der Kühlkanäle weist geringe Herstellungskosten auf. Die Kühlkanäle können gerade Bohrungen sein, die durch unterschiedliche Fertigungsverfahren (z.B. Bohren, Funkenerodieren oder beispielsweise elektrochemisches Abtragen) hergestellt werden können.

Es kann auch als vorteilhaft betrachtet werden, dass mindestens ein in einem thermisch höher beanspruchten Bereich angeordneter Kühlkanal einen größeren Durchmesser aufweist als einer der Kühlkanäle in einem thermisch weniger beanspruchten Bereich des Flammrohr-Endbereichs.

Dies ermöglicht die Umsetzung der Erfindung beispielsweise mit gleichmäßig um den Umfang herum verteilten Kühlkanälen. Erfindungsgemäß können deren Durchmesser in thermisch stärker beanspruchten Bereichen größer als in den thermisch weniger beanspruchten Bereichen gewählt sein. Es könnten beispielsweise alle oder nur ein Teil der Kühlluftkanäle in den thermisch stärker beanspruchten Bereichen mit größeren Durchmessern ausgebildet sein.

Gemäß einer weiteren vorteilhaften Ausgestaltung der Erfindung, die sich auch vorteilhaft mit der vorherigen kombinieren lässt, können die Kühlkanäle in mindestens einem thermisch höher beanspruchten Bereich im Durchschnitt einen geringeren Abstand zu den direkt benachbarten Kühlkanälen aufweisen als in mindestens einem thermisch weniger beanspruchten Bereich.

Die Werkzeuge zum Einbringen der Kühlkanäle in den Cooling Ring können mit den entsprechenden Abständen auf einem Ring angeordnet sein, so dass die Herstellung der Kanäle parallel erfolgen kann. Der Cooling Ring ist dann mit entsprechender Ausrichtung zu den Brennern am Flammrohr zu befestigen.

Es kann auch als vorteilhaft angesehen werden, dass der zylindrische Flammrohr-Endbereich aus mindestens zwei zylindrischen Teil-Bereichen zusammengesetzt ist, die jeweils an einer senkrecht zur Zylinderachse verlaufenden Schnittfläche zusammengefügt sind, wobei mindestens ein in einem thermisch wenig stark beanspruchten Bereich verlaufender Kühlkanal in gerader Linie durch die Schnittfläche hindurch fortgesetzt ist und/oder mindestens ein in einem thermisch höher beanspruchten Bereich verlaufender Kanal zusammengefügt ist aus einem Kühlkanal in dem stromauf angeordneten Teil-Bereich, der über einen entlang der Schnittfläche verlaufenden Kühlkanalabschnitt fluidisch mit mindestens einem in dem stromab angeordneten Teil-Bereich verlaufenden Kühlkanal verbunden ist.

Die zusammengesetzten Kühlkanäle haben den Vorteil, dass die sich im Allgemeinen stromab verbreiternden thermisch stärker beanspruchten Bereiche besser versorgt werden können, da die Kühlkanäle der Form des Bereiches folgen können. Die Verwendung des mindestens zweiteiligen Cooling Rings ermöglicht es zudem, eine unterschiedliche Anzahl von Kühlkanälen in den Teilen des Cooling Rings einzubringen, wobei stromab der Schnittfläche mehrere Kühlkanäle an einen stromauf gelegenen Kühlkanal anschließen. Hierzu verbindet eine in die Schnittfläche eingebrachte Nut (die Nut kann in beide Stirnseiten oder nur in eine Stirnseite der Teil-Bereiche des Flammrohr-Endbereichs eingebracht sein) den stromauf gelegenen Kühlkanal mit dem mindestens einen stromab gelegenen Kühlkanal.

Vorzugsweise folgt eine Anzahl an Kühlkanälen mittels mindestens einem derartigen zusammengesetzten Kühlkanal dem Verlauf eines sich in Hauptströmungsrichtung verbreiternden, thermisch höher beanspruchten Bereich.

Dies ermöglicht eine Kühlung des thermisch stärker beanspruchten Bereichs.

Es kann auch vorteilhaft vorgesehen sein, dass die zusammengesetzen Kühlkanäle an der Schnittfläche in mindestens zwei Kühlkanäle auffächern.

Dies ermöglicht eine besonders gleichmäßige Kühlung des thermisch stärker beanspruchten Bereichs.

Damit der Kühlkanalabschnitt nicht bestimmend für die Aufteilung der Kühlluft der aufgefächerten Kühlkanäle ist, kann vorteilhaft vorgesehen sein, dass die Querschnittsfläche des entlang der Schnittfläche verlaufenden Kühlkanalabschnitts mindestens doppelt so groß ist wie die jeweiligen Querschnittsflächen der mindestens zwei stromab an den Kühlkanalabschnitt sich anschließenden Kühlkanäle. Vorzugsweise ist die Querschnittsfläche im Wesentlichen dreimal so groß wie die Querschnittsfläche der stromab sich anschließenden Kühlkanäle.

Eine weitere Aufgabe der Erfindung ist es, einen Flammrohr-Endbereich der eingangs genannten Rohrbrennkammer anzugeben, mit welcher Schadstoffemissionen gesenkt werden können.

Die Aufgabe wird erfindungsgemäß bei einem Flammrohr-Endbereich der genannten Art dadurch gelöst, dass er Bestandteil der Rohrbrennkammer nach einem der Ansprüche 1 bis 9 ist.

Eine weitere Aufgabe der Erfindung ist es, eine Gasturbine mit mindestens einer eingangs genannten Rohrbrennkammer anzugeben, mit welcher Schadstoffemissionen gesenkt werden können.

Die Aufgabe wird erfindungsgemäß bei einer Gasturbine der genannten Art dadurch gelöst, dass sie mindestens eine Rohrbrennkammer nach einem der Ansprüche 1 bis 9 umfasst.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

### Dabei zeigt die

- Fig. 1: schematisch einen Längsschnitt durch eine Gasturbine nach dem Stand der Technik,
- Fig. 2: schematisch einen Längsschnitt durch eine Rohrbrenn-kammer nach dem Stand der Technik,
- Fig. 3: stark schematisch vereinfacht eine Abwicklung des Flammrohres nach dem Stand der Technik,
- Fig. 4: stark schematisch vereinfacht eine Abwicklung des Flammrohres mit einem erfindungsgemäß ausgebildeten Flammrohr-Endbereich gemäß einem ersten Ausführungs-beispiel,
- Fig. 5: stark schematisch vereinfacht eine Abwicklung des Flammrohres mit einem erfindungsgemäß ausgebildeten Flammrohr-Endbereich gemäß einem zweiten Ausführungs-beispiel, und
- Fig. 6: stark schematisch vereinfacht eine Abwicklung des Flammrohres mit einem erfindungsgemäß ausgebildeten Flammrohr-Endbereich gemäß einem dritten Ausführungs-beispiel.

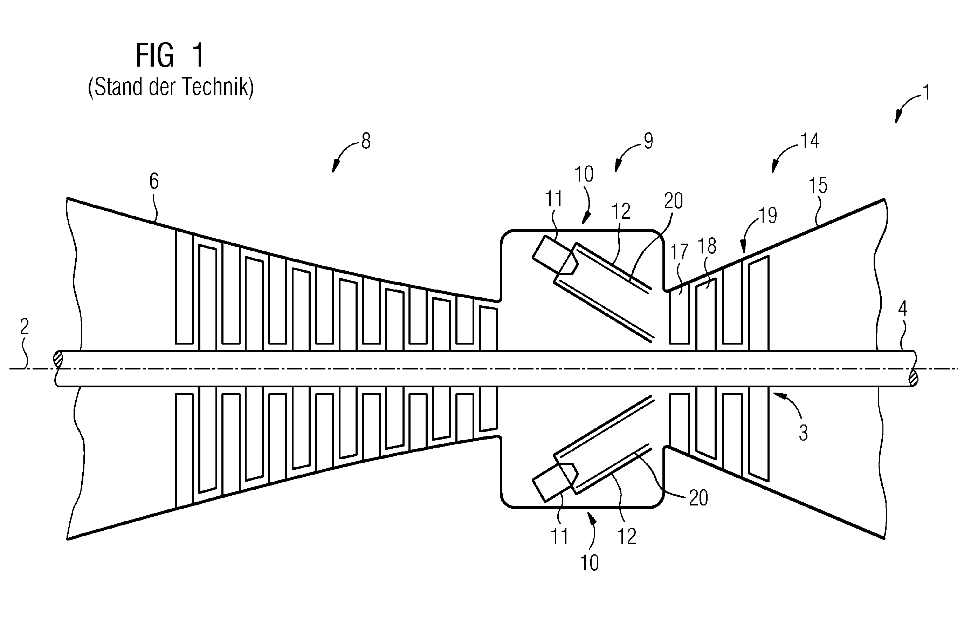

Die Figur 1 zeigt eine schematische Schnittansicht einer Gasturbine 1 nach dem Stand der Technik. Die Gasturbine 1 weist im Inneren einen um eine Rotationsachse 2 drehgelagerten Rotor 3 mit einer Welle 4 auf, der auch als Turbinenläufer bezeichnet wird. Entlang des Rotors 3 folgen aufeinander ein Ansauggehäuse 6, ein Verdichter 8, ein Verbrennungssystem 9 mit einer Anzahl an Brennkammern 10, eine Turbine 14 und ein Abgasgehäuse 15. Die Brennkammern 10 umfassen jeweils eine Brenneranordnung 11 und ein Gehäuse 12, welches zum Schutz vor Heißgasen mit einem Hitzeschild 20 ausgekleidet ist.

Das Verbrennungssystem 9 kommuniziert mit einem beispielsweise ringförmigen Heißgaskanal. Dort bilden mehrere hintereinander geschaltete Turbinenstufen die Turbine 14. Jede Turbinenstufe ist aus Schaufelringen gebildet. In Strömungsrichtung eines Arbeitsmediums gesehen folgt im Heißkanal einer aus Leitschaufeln 17 gebildeten Reihe eine aus Laufschaufeln 18 gebildete Reihe. Die Leitschaufeln 17 sind dabei an einem Innengehäuse eines Stators 19 befestigt, wohingegen die Laufschaufeln 18 einer Reihe beispielsweise mittels einer Turbinenscheibe am Rotor 3 angebracht sind. An dem Rotor 3 angekoppelt ist beispielsweise ein Generator (nicht dargestellt).

Während des Betriebes der Gasturbine wird vom Verdichter 8 durch das Ansauggehäuse 6 Luft angesaugt und verdichtet. Die am turbinenseitigen Ende des Verdichters 8 bereitgestellte verdichtete Luft wird zu dem Verbrennungssystem 9 geführt und dort im Bereich der Brenneranordnung 11 mit einem Brennstoff vermischt. Das Gemisch wird dann mit Hilfe der Brenneranordnung 11 unter Bildung eines Arbeitsgasstromes im Verbrennungssystem 9 verbrannt. Von dort strömt der Arbeitsgasstrom entlang des Heißgaskanals an den Leitschaufeln 17 und den Laufschaufeln 18 vorbei. An den Laufschaufeln 18 entspannt sich der Arbeitsgasstrom impulsübertragend, so dass die Laufschaufeln 18 den Rotor 3 antreiben und dieser den an ihn angekoppelten Generator (nicht dargestellt).

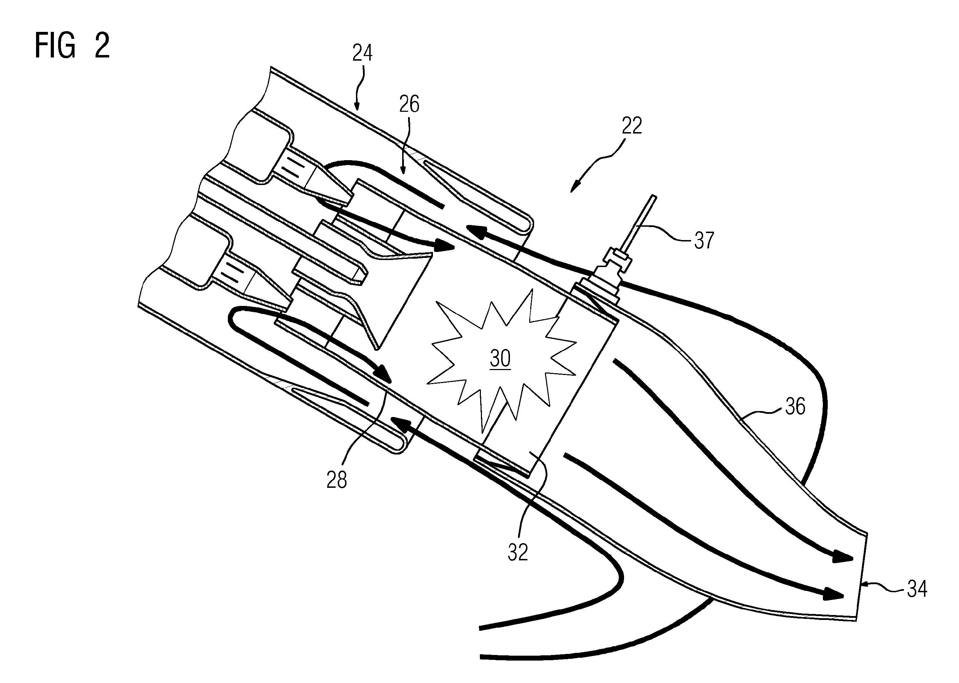

Die Figur 2 zeigt eine Rohrbrennkammer 22 einer Gasturbine. Am Brennkammerkopfende 24 ist eine Brenneranordnung 26 angeordnet. Diese umfasst einen zentralen Pilotbrenner und um diesen herum angeordnet eine Anzahl an Hauptbrennern. Die Brenneranordnung mündet in ein zylindrisch ausgebildetes Flammrohr 28, welches eine erste Verbrennungszone 30 umschließt und einen zylindrischen Flammrohr-Endbereich 32 umfasst. Zur fluidischen Verbindung des Flammrohr-Endbereiches 32 mit einem Brennkammerausgang 34 erstreckt sich ein Überleitungskanal 36 (Transition) zwischen dem Flammrohr-Endbereich 32 und dem Brennkammerausgang 34. Der zylindrische Flammrohr-Endbereich ragt in den Überleitungskanal 36 hinein. Im Bereich des Übergangs zwischen Flammrohr 28 und Überleitungskanal ist ein mittels einer Federdichtung abgedichteter ringförmiger Kanal, der thermische Spannungen zwischen den beiden Bauteilen Flammrohr und Transition verhindert. Der Überleitungskanal ist an seinem stromauf gelegenen Ende mittels eines Haltebügels 37 an einem äußeren Gehäuse (nicht dargestellt) der Gasturbine befestigt. Da die Hauptbrenner stromab ihrer Brennerausgänge jeweils eine Flamme in der ersten Verbrennungszone 30 erzeugen, ist die thermische Beanspruchung in den stromab der Brennerausgänge gelegenen Bereichen stärker als in den Bereichen dazwischen. Der Flammrohr-Endbereich 32 wird somit um den Umfang herum nicht gleichmäßig thermisch beansprucht.

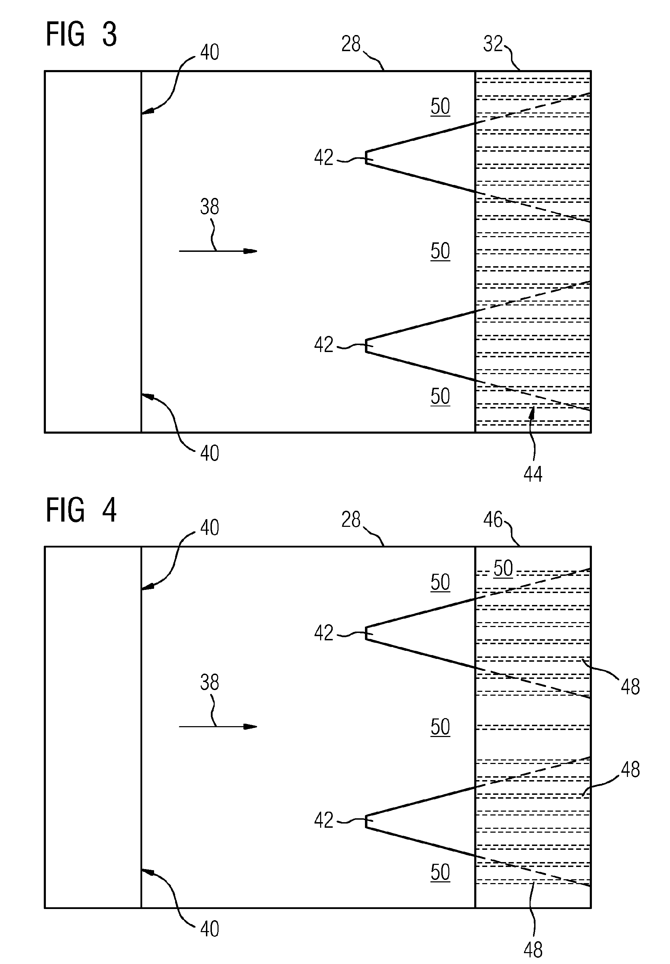

Fig. 3 zeigt eine stark schematisch vereinfachte Darstellung einer Abwicklung eines Flammrohres 28 nach dem Stand der Technik. Eine Hauptströmungsrichtung in der Brennkammer sei mit dem Pfeil 38 verdeutlicht, um die Begriffe stromauf und stromab auf die Figur 3 anwenden zu können. Der Bereich 40 kennzeichne die Brennerausgänge von zwei Brennern der Brenneranordnung. Bei den Brennern kann es sich um sogenannte Hauptdrallerzeuger handeln, die jeweils eine Vormischstrecke umfassen, wobei der Ausgang der Vormischstrecke mit Brennerausgang bezeichnet werden kann. Stromab der Brennerausgänge bilden sich dabei verbreiternde - hier dreckförmig wiedergegebene - Bereiche 42 des Flammrohres, die thermisch stärker beansprucht sind (deutlich höhere Wandtemperatur).Die Kegel deuten die Erhöhung der Basketwandtemperatur durch die Flamme an, die in Strömungsrichtung einen immer größeren Umfang des Basket betrifft. Bei der Darstellung handelt es sich um eine Prinzip-Skizze, die die Situation in dem Verbrennungssystem in etwa wiedergibt. Die Bereiche 42 reichen bis in den Flammrohr-Endbereich 32 hinein. Der Flammrohr-Endbereich 32 ist von Kühlkanälen 44 durchzogen, die sich parallel zur Hauptströmungsrichtung 38 erstrecken und gleichmäßig voneinander beabstandet sind. Dies hat eine gleichmäßige Kühlung des Bauteils zur Folge. Wie man erkennen kann, werden durch die Kühlkanäle auch Bereiche gekühlt, die noch keine erhöhte Wandtemperatur sehen.

Die Figur 4 zeigt eine Abwicklung des Flammrohres 28 gemäß einem ersten Ausführungsbeispiel der Erfindung. Der Flammrohr-Endbereich 46 weist hierbei parallel zur Hauptströmungsrichtung 38 (welche parallel zu einer Längsachse der Brennkammer verläuft) sich erstreckende Kühlkanäle 48 auf. Diese sind erfindungsgemäß derart angeordnet, dass thermisch weniger beanspruchte Bereiche 50 durchschnittlich von weniger Kühlluft durchströmt sind als thermisch höher beanspruchte Bereiche 42 des Flammrohr-Endbereichs 46. Dies wird bei dem dargestellten Ausführungsbeispiel dadurch bewirkt, dass die Kühlkanäle 48 in thermisch höher beanspruchten Bereichen 42 einen geringeren Abstand zu den direkt benachbarten Kühlkanälen 48 aufweisen als in den thermisch weniger beanspruchten Bereichen 50. Den gleichen Effekt könnte man erreichen, wenn beispielsweise ein oder mehrere in einem thermisch höher beanspruchten Bereich 42 angeordnete Kühlkanäle einen größeren Durchmesser aufweisen als ein oder mehrere Kühlkanäle 48 in den thermisch weniger beanspruchten Bereichen 50 des Flammrohr-Endbereichs 46. Die Kühlkanäle sind gerade Bohrungen. Die Kühlluftverteilung ist erfindungsgemäß an die Ungleichverteilung der thermischen Belastung angepasst.

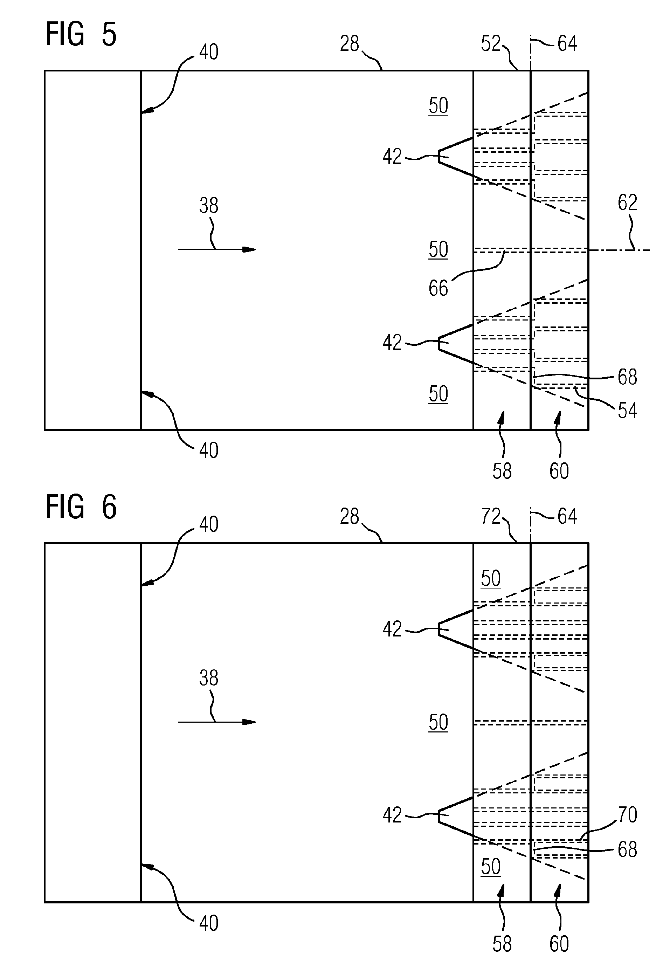

Figur 5 zeigt eine Abwicklung eines Flammrohres 28 mit einem Flammrohr-Endbereich 52 gemäß einem zweiten Ausführungsbeispiel der Erfindung. Der erfindungsgemäße Flammrohr-Endbereich 52 ist aus zwei zylindrischen Teil-Bereichen 58 und 60 zusammengesetzt, die jeweils an einer senkrecht zur Zylinderachse 62 verlaufenden Schnittfläche 64 zusammengefügt sind. Die Kühlkanäle in dem Flammrohr-Endbereich 52 umfassten zwischen den thermisch stärker beanspruchten Bereichen 42 jeweils einen in einem thermisch wenig stark beanspruchten Bereich 50 verlaufenden Kühlkanal 66, der in gerader Linie durch die Schnittfläche 64 hindurch fortgesetzt ist. Der Flammrohr-Endbereich 52 umfasst auch in den thermisch höher beanspruchten Bereichen 42 verlaufende Kanäle 54, die zusammengefügt sind aus einem Kühlkanal in dem stromauf angeordneten Teil-Bereich 58, der über einen entlang der Schnittfläche 64 verlaufenden Kühlkanalabschnitt 68 fluidisch mit einem in dem stromab angeordneten Teil-Bereich 60 verlaufenden Kühlkanal verbunden ist. Die Ausbildung der Kühlkanäle 54 eignet sich, um dem Verlauf des sich stromab verbreiternden, thermisch stärker beanspruchten Bereich 42 zu folgen, wodurch die Bereiche 42 auch im Teil-Bereich 60 über ihre gesamte Breite von Kühlkanälen durchzogen sind. Die Kühlkanalabschnitt 68 kann durch Nuten in den die Schnittfläche begrenzenden Stirnseiten der Teil-Bereiche ausgebildet sein.

Die Figur 6 zeigt ein drittes Ausführungsbeispiel des Flammrohr-Endbereiches 72. Der Flammrohr-Endbereich 72 unterscheidet sich von dem in Figur 5 dargestellten Ausführungsbeispiel dadurch, dass die zusammengesetzen Kühlkanäle 70 in dem thermisch stärker beanspruchten Bereich 42 an der Schnittfläche 64 in zwei Kühlkanäle auffächern (in mehr als zwei ist ebenfalls möglich). Bei dem in Figur 6 dargestellten Ausführungsbeispiel ist somit die Anzahl der Kühlkanäle im Teil-Bereich 60 höher als im Teil-Bereich 58.

Dies hat zum einen den Vorteil, dass sowohl im Teil-Bereich 58 als auch im Teil-Bereich 60 die Kühlkanäle im thermisch stark beanspruchten Bereich 42 den gleichen Abstand zu den direkt benachbarten Kühlkanälen aufweisen können (gleichmäßige Kühlung). Ein weiterer Vorteil ist, dass durch die Umlenkung der Strömung des Kühlfluids im Kanal im Kühlkanalabschnitt 68 die thermische und hydrodynamische Grenzschicht des Kühlfluids gestört wird, was zu einer Erhöhung des Wärmeübergangs im Einlaufbereich der Kühlkanäle im stromab gelegenen Teil-Bereich 60 führt. (Dieser weitere Effekt tritt auch bei den zusammengesetzten Kanälen der vorherigen Figuren auf). Somit kann eine Überhitzung der Bereiche 42 des Flammrohr-Endbereichs sicher vermieden werden und aufgrund der geringeren Kühlung der weniger stark beanspruchten Bereiche 50 Kühlluft eingespart werden. Bei dem dargestellten Beispiel sollte darauf geachtet werden, dass die Umfangsnuten in den Kühlkanalabschnitten entlang der Schnittfläch nicht bestimmend für die Luftaufteilung auf die Kühlkanäle im Teil-Bereich 60 sind. Besonders vorteilhaft ist eine Querschnittsfläche des Kühlkanalabschnitts, die ca. das Dreifache der jeweiligen Querschnittsfläche der stromab sich anschließenden Kanäle ist.

## Patentansprüche

1. Rohrbrennkammer (22) für eine Gasturbine (1), mit
- einem Brennkammerkopfende (24), an welchem mindestens eine erste Brenneranordnung (11,26) angeordnet ist,
- einem im Wesentlichen zylindrisch ausgebildeten Flammrohr (28), welches eine erste Verbrennungszone (30) umschließt und einen zylindrischen Flammrohr-Endbereich (32, 46, 52, 72) umfasst, und
- einem Überleitungskanal (36), wobei der zylindrische Flammrohr-Endbereich (28) in den Überleitungskanal hineinragt und der Überleitungskanal das Flammrohr fluidisch mit einem an einen Turbineneingangsbereich anordenbaren Brennkammerausgang (34) verbindet,
- wobei der zylindrische Flammrohr-Endbereich eine Anzahl an Kühlkanälen (44, 48" 54, 66, 70) umfasst, welche im Wesentlichen parallel zur Mantelfläche des Flammrohr-Endbereichs im Inneren des Flammrohr-Endbereiches verlaufen,
**dadurch gekennzeichnet, dass** die Ausbildung und/oder Anordnung der Kühlkanäle derart ist, dass thermisch weniger beanspruchte Bereiche (50) durchschnittlich von weniger Kühlluft durchströmt sind als thermisch höher beanspruchte Bereiche (42) des Flammrohr-Endbereichs (32, 46, 52, 72).

2. Rohrbrennkammer (22) nach Anspruch 1,
**dadurch gekennzeichnet, dass** die Brenneranordnung (11, 26) am Brennkammerkopfende eine Anzahl von Brennern umfasst, welcher entlang des Umfangs der Brennkammer (22) ringförmig angeordnet sind, so dass während des Betriebs jeweils stromab eines Brenner ein sich in Strömungsrichtung verbreiternder, thermisch höher beanspruchter Bereich (42) des Flammrohres (28) ausgebildet ist, welcher sich bis in den Flammrohr-Endbereich (32, 46, 52, 72) des Flammrohres erstreckt, wobei die Bereiche (50) zwischen den thermisch höher beanspruchten Bereichen thermisch weniger beansprucht sind.

3. Rohrbrennkammer (22) nach Anspruch 1 oder 2, **dadurch gekennzeichnet, dass** die Kühlkanäle (44, 48" 54, 66, 70) sich im Wesentlichen parallel zu einer Längsachse der Brennkammer erstrecken.

4. Rohrbrennkammer (22) nach einem der vorhergehenden Ansprüche,
**dadurch gekennzeichnet, dass** mindestens ein in einem thermisch höher beanspruchten Bereich (42) angeordneter Kühlkanal einen größeren Durchmesser aufweist als einer der Kühlkanäle in einem thermisch weniger beanspruchten Bereich (50) des Flammrohr-Endbereichs (32, 46, 52, 72).

5. Rohrbrennkammer (22) nach einem der vorhergehenden Ansprüche,
**dadurch gekennzeichnet, dass** die Kühlkanäle (48) in mindestens einem thermisch höher beanspruchten Bereich (42) im Durchschnitt einen geringeren Abstand zu den direkt benachbarten Kühlkanälen aufweisen als in mindestens einem thermisch weniger beanspruchten Bereich (50).

6. Rohrbrennkammer (22) nach einem der vorhergehenden Ansprüche,
**dadurch gekennzeichnet, dass** der zylindrische Flammrohr-Endbereich (52, 72) aus mindestens zwei zylindrischen Teil-Bereichen (58, 60) zusammengesetzt ist, die jeweils an einer senkrecht zur Zylinderachse (62) verlaufenden Schnittfläche (64) zusammengefügt sind, wobei mindestens ein in einem thermisch wenig stark beanspruchten Bereich (50) verlaufender Kühlkanal (66) in gerader Linie durch die Schnittfläche (64) hindurch fortgesetzt ist und/oder mindestens ein in einem thermisch höher beanspruchten Bereich (42) verlaufender Kanal (54, 70) zusammengefügt ist aus einem Kühlkanal in dem stromauf angeordneten Teil-Bereich, der über einen entlang der Schnittfläche verlaufenden Kühlkanalabschnitt (68) fluidisch mit mindestens einem in dem stromab angeordneten Teil-Bereich verlaufenden Kühlkanal verbunden ist.

7. Rohrbrennkammer (22) nach Anspruch 6,
**dadurch gekennzeichnet, dass** eine Anzahl an Kühlkanälen mittels mindestens einem derartigen zusammengesetzten Kühlkanal (54, 70) dem Verlauf eines sich in Hauptströmungsrichtung verbreiternden, thermisch höher beanspruchten Bereich (42) folgt.

8. Rohrbrennkammer (22) nach Anspruch 7,
**dadurch gekennzeichnet, dass** die zusammengesetzen Kühlkanäle (54, 70) stromab des der Schnittfläche in mindestens zwei Kühlkanäle auffächern.

9. Rohrbrennkammer nach Anspruch 8,
**dadurch gekennzeichnet, dass** die Querschnittsfläche des entlang der Schnittfläche verlaufenden Kühlkanalabschnitts mindestens doppelt so groß ist wie die jeweiligen Querschnittsflächen der mindestens zwei stromab an den Kühlkanalabschnitt sich anschließenden Kühlkanäle.

10. Zylindrischer Flammrohr-Endbereich einer Rohrbrennkammer, **dadurch gekennzeichnet, dass** er Bestandteil der Rohrbrennkammer nach einem der Ansprüche 1 bis 9 ist.

11. Gasturbine mit mindestens einer Rohrbrennkammer, **dadurch gekennzeichnet, dass** mindestens eine Rohrbrennkammer nach einem der Ansprüche 1 bis 9 ausgebildet ist.
